## Europäisches Patentamt
## European Patent Office
## Office européen des brevets

(19)

(11) Numéro de publication: **0 254 631 B1**

(12) **FASCICULE DE BREVET EUROPEEN**

(45) Date de publication du fascicule du brevet:
**13.12.89**

(51) Int. Cl.⁴: **B60K 15/00**, F16K 17/36

(21) Numéro de dépôt: **87401675.1**

(22) Date de dépôt: **16.07.87**

(54) **Dispositif d'aération d'un réservoir de carburant.**

(30) Priorité: **23.07.86 FR 8610705**

(43) Date de publication de la demande:
**27.01.88 Bulletin 88/4**

(45) Mention de la délivrance du brevet:
**13.12.89 Bulletin 89/50**

(84) Etats contractants désignés:
**DE GB IT**

(56) Documents cités:
**US-A- 3 765 435**
**US-A- 3 996 951**
**US-A- 4 095 609**
**US-A- 4 579 135**

(73) Titulaire: **AUTOMOBILES PEUGEOT, 75, avenue de la Grande Armée, F-75116 Paris(FR)**
Titulaire: **AUTOMOBILES CITROEN, 62 Boulevard Victor-Hugo, F-92200 Neuilly-sur-Seine(FR)**

(72) Inventeur: **Ubaldi Raymond, 3 rue des Brusses, Bart 25420 Voujeaucourt(FR)**

(74) Mandataire: **Polus, Camille et al, c/o Cabinet Lavoix 2, Place d'Estienne d'Orves, F-75441 Paris Cedex 09(FR)**

ACTORUM AG

# Description

La présente invention a pour objet un dispositif d'aération d'un réservoir de carburant de véhicule automobile, comportant, pour assurer la mise a l'air libre de la partie interne supérieure du réservoir :

- d'une part un tube de dégazage dont une extrémité débouche dans ladite partie interne, plus bas que la cloison supérieure du réservoir, de sorte qu'une capacité d'expansion dite intégrée est délimitée, lors de l'emplissage maximal du réservoir, entre cette cloison et le niveau de carburant atteignant ladite extrémité;

- et d'autre part, un conduit d'aération débouchant dans ladite partie interne par l'intermédiaire d'une valve portée par la cloison supérieure, et propre à fermer le conduit au moins si le véhicule se retourne et à l'ouvrir dans certaines conditions d'utilisation.

La capacité d'expansion permet au carburant liquide contenu dans le réservoir de se dilater sans risque de débordement. La valve est ouverte au moins quand une aspiration de carburant vers le moteur du véhicule implique une entrée d'air dans le résevoir, ou quand un échauffement du carburant provoque sa dilatation, nécessitant une évacuation d'air pour éviter une surpression.

Dans une disposition connue, la valve comprend deux clapets à ressort montés tête-bêche et ne s'ouvrant l'un, pour assurer l'entrée d'air, que lorsque règne dans le réservoir une dépression dépassant un seuil donné, et l'autre, pour assurer une évacuation d'air, que lorsque règne dans le réservoir une pression supérieure à un seuil donné. La mise à l'air libre n'est donc pas permanente mais tributaire du tarage des ressorts. Il s'ensuit un fonctionnement peu sûr de la valve.

On connait par ailleurs une valve à flotteur et à bille (brevet US-A 3 765 435) normalement ouverte par action de la pesanteur, et fermée soit en cas de renversement du véhicule grâce au poids de la bille, soit lorsque le carburant parvient à hauteur de la valve et soulève le flotteur. Si une telle valve était placée classiquement dans la cloison supérieure du réservoir et associée à un tube de dégazage débouchant plus bas que cette cloison, lors du remplissage le carburant atteindrait d'abord l'extrémité du tube, la valve restant ouverte laisserait s'évacuer l'air situé plus haut que cette extrémité, le niveau de carburant s'élèverait jusqu'à la valve, donc sensiblement jusqu'à la cloison supérieure la contenant. Il ne serait donc pas formé de capacité d'expansion entre la cloison supérieure et l'extrémité du tube; s'il s'en formait néanmoins une entre le flotteur et ladite cloison, elle serait relativement petite, donc peu compressible et sujette à une forte augmentation de pression en cas de dilatation du carburant, cette suppression ne pouvant être réduite par évacuation à travers la valve, fermée tant que le niveau de carburant l'atteint.

Enfin les brevets US 4 095 609 et 3 996 951 décrivent des vannes à bille sur rampe, sans flotteur et disposées en dehors du réservoir, donc sans aucune action du niveau de liquide dans le réservoir sur la fermeture du conduit de dégazage associé.

L'invention a donc pour but de réaliser l'aération d'un réservoir de carburant, de préférence à capacité d'expansion intégrée, de manière à éviter toute surpression ou dépression dans le réservoir, tout en empêchant son vidage en cas de retournement du véhicule.

Suivant l'invention, la valve étant du type à bille et à flotteur, normalement ouverte mais fermée en cas de renversement par un organe de fermeture coopérant avec la bille, le flotteur s'étend suffisamment bas pour être soulevé par le carburant quand celui ci atteint l'extrémité du tube de dégazage, la face inférieure du flotteur étant plus bas que l'extrémité du tube, et des moyens d'écoulement limité du carburant sont prévus pour que ce soulèvement place la valve dans un état d'ouverture partielle.

Suivant d'autres caractéristiques avantageuses de l'invention :

- La valve comportant un boitier ouvert dans lequel coulisse le flotteur, celui-ci délimite avec le fond supérieur du boitier, où débouche ledit conduit, une chambre communiquant en permanence avec la partie interne du réservoir par un trou de faible section, ménagé dans la paroi du flotteur, et quand le flotteur est en position basse par au moins un passage réservé entre le boîtier et le flotteur, propre à être obturé en position soulevée du flotteur.

- La chambre contient une pièce en forme de cloche qui recouvre une bille reposant sur un évidement conique du flotteur, et qui est munie sur sa face supérieure d'un bossage propre à fermer, si le véhicule se retourne, un orifice par lequel le conduit débouche dans le fond du boîtier.

- La valve est fixée à une portion basse et centrale de la cloison supérieure.

D'autres particularités et avantages de l'invention apparaitront au cours de la description qui va suivre, faite en référence aux dessins annexés qui en illustrent un mode de réalisation à titre d'exemple non limitatif :

- la Figure 1 est une vue en élévation simplifiée d'un réservoir de carburant de véhicule, muni d'un dispositif d'aération selon l'invention;

- la Figure 2 est une vue en coupe verticale à échelle agrandie, du dispositif d'aération du réser voir de la Figure 1;

- la Figure 3 est une vue en coupe transversale du flotteur au niveau de son trou d'aération de faible section.

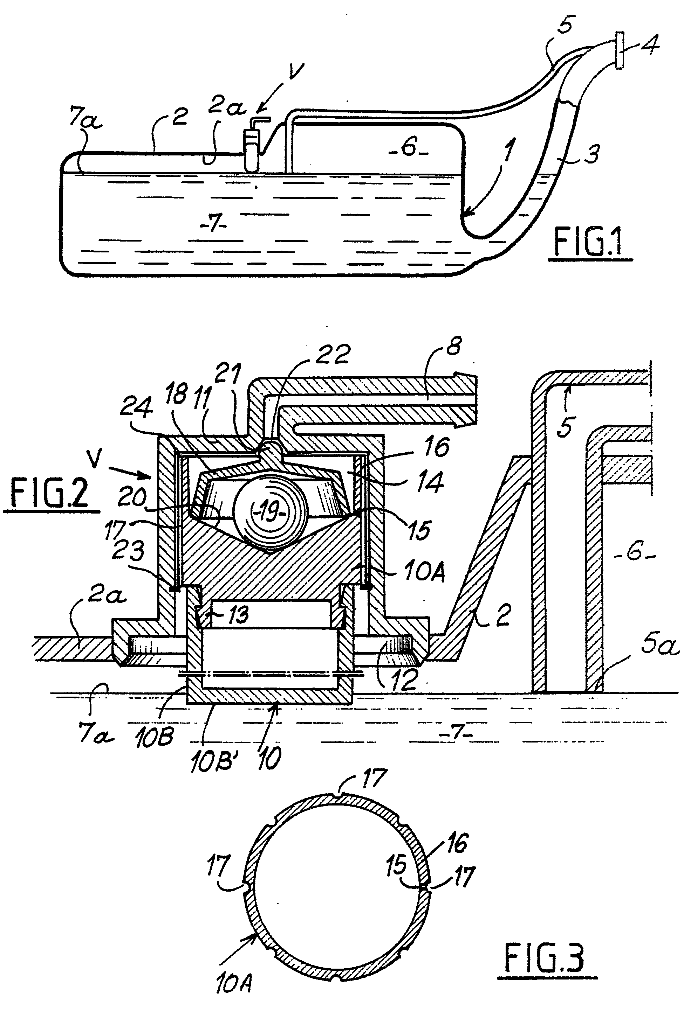

On voit à la Figure 1 un réservoir 1 de carburant d'un véhicule automobile, comportant une cloison supérieure 2 et une tubulure de remplissage 3 fermée par un bouchon étanche 4. Le réservoir 1 est équipé d'un tuyau de dégazage 5 qui pénètre dans une capacité 6 d'expansion intégrée du volume du carburant 7 à la partie interne supérieure du réservoir 1, l'extrémité inférieure 5a du tuyau 5 étant située au niveau maximal 7a du carburant, lorsque le réservoir 1 est empli. La capacité d'expansion intégrée 6 est ainsi délimitée par le niveau maximum 7a du carburant 7 et par la cloison supérieure 2. L'extrémité 5a de la tubulure 5 débouche donc dans la partie interne supérieure du réservoir, notablement plus bas que la cloison supérieure 2.

Le dispositif d'aération du réservoir 1 comprend également un conduit 8 reliant ladite partie interne supérieure du réservoir 1 à l'extérieur, par l'intermédiaire d'une valve V portée par la cloison supérieure 2.

La valve V comporte un boîtier 11 ouvert vers l'intérieur du réservoir 1, solidaire du conduit 8, sa base étant fixée dans une ouverture correspondante 12 de la paroi supérieure 2. Il convient par ailleurs de noter que la valve V et l'extrémité 5a du tuyau de dégazage 5 sont placées au plus près du centre de la partie supérieure du réservoir 1, pour que la capacité d'expansion intégrée 6 soit peu influencée par l'inclinaison du véhicule, la valve V étant fixée à une portion basse et centrale 2a de la cloison supérieure 2.

Dans l'exemple décrit, le flotteur 10 est composé de deux parties : une partie supérieure 10A coulissant dans le boîtier 11 et une partie inférieure 10B avec réserve d'air, amoviblement rapportée sur la base de partie supérieure 10A, par exemple, comme représenté à la Figure 2, par clipsage sur une collerette 13 constituant la base de la partie supérieure 10A. Cette dernière délimite avec le fond supérieur du boîtier 11, où débouche le conduit 8, une chambre 14 communiquant en permanence avec la partie interne du réservoir 1 par un trou 15 de faible section, ménagé dans la paroi 16 de la partie supérieure 10A du flotteur 10. Complémentairement, au moins un passage est réservé entre le boîtier 11 et la partie supérieure 10A du flotteur 10 : dans l'exemple décrit, une série de huit passages sont ainsi formés par des gorges 17 ménagées longitudinalement sur la périphérie de la partie supérieure 10A. Ces gorges 17 sont obturées en position soulevée du flotteur 10 (Figure 2), quand sa partie supérieure 10A vient en butée contre le fond supérieur du boîtier 11, et ouvertes quand le flotteur 10 est en position basse, les gorges 17 communiquant alors avec la chambre 14.

Cette dernière contient une pièce 18 en forme de cloche qui recouvre une bille 19 reposant sur un évidement conique 20 de la partie supérieure 10A du flotteur 10, et qui est munie sur sa face supérieure d'un bossage 21 propre à fermer, si le véhicule se retourne, un orifice 22 par lequel le conduit 8 débouche dans le fond du boîtier 11.

La course de coulissement de la partie supérieure 10A dans le boîtier 11 est limitée par une bague 23 partiellement logée dans la paroi interne du boîtier 11, et constituant un limiteur de débattement pour le flotteur 10. La partie inférieure 10B de ce dernier s'étend suffisamment bas pour que le flotteur 10 puisse être soulevé par le carburant 7 quand celui-ci atteint l'extrémité inférieure 5a du tuyau de dégazage 5, la face inférieure 10B' de la partie inférieure 10B étant située à cet effet plus bas que l'extrémité 5a.

D'autre part, la constitution du flotteur 10 en deux parties séparables 10A et 10B est préférée, car elle permet d'utiliser, soit la partie supérieure 10A seule pour les réservoirs sans capacité d'expansion, soit les deux parties pour les réservoirs à capacité d'expansion. La partie inférieure 10B est alors de dimension adaptée à celle de la capacité 6. Lorsque le niveau du carburant 7 atteint l'extrémité inférieure 5a du tuyau de dégazage 5, comme représenté aux Figures 1 et 2, la partie supérieure 10A du flotteur 10 soulevé vient en contact avec le fond supérieur du boîtier 11 sur une zone annulaire 24. Les passages 17 sont alors obturés et la communication entre la chambre 14 et la partie interne du réservoir 1 est limitée au trou de fuite 15, dont le diamètre peut être par exemple de 0,4 mm.

Le fonctionnement du dispositif d'aération décrit ci-dessus est le suivant.

En fin de remplissage du réservoir 1, le niveau supérieur 7a du carburant 7 pousse le flotteur 10 vers le haut, en butée contre le fond supérieur du boîtier 11 sur la zone annulaire 24, par laquelle est donc assurée une étanchéité entre le flotteur 10 et le boîtier 11, ce qui réduit considérablement le débit d'air. Cette limitation, parallèlement à l'obturation du tuyau de dégazage 5 par le carburant 7, rend impossible le remplissage au "goutte-à-goutte" en un temps raisonnable.

A ce stade, la mise à l'air libre est assurée par le trou de fuite 15, qui permet :

1) de garantir, lorsque le réservoir 1 est plein, l'évacuation des gaz (refoulement) dans le cas d'une dilatation du volume du carburant lors de son réchauffement, principalement en été.

2) De compenser, lors de l'alimentation du moteur, la baisse de carburant par de l'air (aspiration) jusqu'à la descente du flotteur 10 qui libère le passage annulaire au niveau de la zone 24. En cas de retournement du réservoir à carburant 1, une règlementation officielle limitant l'écoulement de carburant autorisé à 30 grammes/minute est alors respectée, car la bille 19, en se déplaçant, pousse la cloche 18 dont le bossage 21 obture l'orifice 22 du conduit 8.

Le dispositif d'aération selon l'invention présente en substance les avantages suivants en permettant :

a) une mise à l'atmosphère permanente du réservoir à carburant;

b) de garantir une capacité d'expansion intégrée 6 au réservoir à carburant;

c) de respecter la règlementation officielle relative à l'écoulement du carburant en cas de retournement du véhicule.

En effet, les dispositifs d'aération antérieurs connus ne permettent pas de garantir simultanément les trois fonctions ci-dessus, ou présentent certaines faiblesses, en particulier un manque de fiabilité.

## Revendications

1. Dispositif d'aération d'un réservoir (1) de carburant, comportant d'une part un tube de dégazage (5) dont une extrémité (5a) débouche dans la partie interne supérieure du réservoir (1), notablement plus bas qu'une cloison supérieure (2) de ce dernier, et d'autre part un conduit (8) reliant ladite partie interne à l'extérieur par l'intermédiaire d'une valve (V) portée par la cloison supérieure (2), caractérisé en ce que, la valve (V) étant du type à bille (19) et à flotteur (10), normalement ouverte mais fermée en cas de renversement par un organe de fermeture (18) coopérant avec la bille, le flotteur (10) s'étend suffisamment bas pour être soulevé par le carburant (7) quand celui-ci atteint ladite extrémité (5a), la face inférieure (10B') du flotteur (10) étant plus bas que l'éxtrémité (5a) du tube (5), et des moyens (15, 17) d'écoulement limité du carburant sont prévus pour que ce soulèvement place la valve (V) dans un état d'ouverture partielle.

2. Dispositif selon la revendication 1, caractérisé en ce que, la valve (V) comportant un boîtier (11) ouvert dans lequel coulisse le flotteur (10), celui-ci délimite avec le fond supérieur du boîtier (11), où débouche ledit conduit (8), une chambre (14) communiquant en permanence avec la partie interne du réservoir (1) par un trou (15) de faible section, ménagé dans la paroi (16) du flotteur (10), et quand le flotteur (10) est en position basse par au moins un passage (17) réservé entre le boîtier (11) et le flotteur (10), propre à être obturé en position soulevée du flotteur (10).

3. Dispositif selon la revendication 2, caractérisé en ce que la chambre (14) contient une pièce (18) en forme de cloche qui recouvre la bille (19) reposant sur un évidement conique (20) du flotteur (10), et qui est munie sur sa face supérieure d'un bossage (21) propre à fermer, si le véhicule se retourne, un orifice (22) par lequel le conduit (8) débouche dans le fond du boîtier (11).

4 - Dispositif selon l'une des revendications 1 à 3, caractérisé en ce que la valve (V) est fixée à une portion basse et centrale (2a) de la cloison supérieure (2).

5 - Dispositif selon l'une des revendications 1 à 4, caractérisé en ce que le flotteur (10) est composé de deux parties : une partie supérieure (10A) coulissant dans le boîtier (11) et une partie inférieure (10B) avec réserve d'air, amoviblement rapportée sur la base de la partie supérieure (10A).

**Patentansprüche**

1. Entlüftungsvorrichtung für einen Brennstofftank (1), bestehend einerseits aus einem Entgasungsrohr (5), dessen Ende (5a) in den inneren oberen Teil des Tanks (1) mündet, und zwar wesentlich tiefer als eine obere Wand (2) des Tanks, und andererseits aus einem Stutzen (8), der den inneren Teil über ein von der oberen Wand (2) getragenes Ventil (V) mit außen verbindet, dadurch gekennzeichnet, daß das Ventil (V) eine Kugel (19) und einen Schwimmer (10) besitzt und normalerweise offen ist, im Fall des Umkippens jedoch durch ein mit der Kugel zusammenwirkendes Verschlußorgan (18) verschlossen wird, daß sich der Schwimmer (10) ausreichend weit nach unten erstreckt, um von dem Brennstoff (7) angehoben zu werden, wenn dieser das Ende (5a) erreicht, wobei die Unterseite (10B') des Schwimmers (10) tiefer als das Ende (5a) des Rohrs (5) liegt, und daß Einrichtungen (15, 17) zum begrenzten Fließen des Brennstoffs vorgesehen sind, so daß das Ventil (V) durch die Anhebung des Schwimmers in einen Zustand partieller Öffnung gelangt.

2. Vorrichtung nach Anspruch 1, dadurch gekennzeichnet, daß das Ventil (V) ein offenes Gehäuse (11) besitzt, in dem der Schwimmer (10) gleitet, und daß der Schwimmer mit der oberen Wand des Gehäuses (11), an der der Stutzen (8) ausmündet, eine Kammer (14) abgrenzt, die mit dem Inneren des Tanks (1) ständig über eine in der Wand (16) des Schwimmers (10) vorgesehene Bohrung (15) mit geringem Querschnitt und, wenn der Schwimmer (10) die untere Stellung einnimmt, über mindestens einen zwischen dem Gehäuse (11) und dem Schwimmer (10) vorgesehenen Durchgang (17) verbunden ist, der in der angehobenen Stellung des Schwimmers (10) geschlossen ist.

3. Vorrichtung nach Anspruch 2, dadurch gekennzeichnet, daß die Kammer (14) ein glockenförmiges Teil (18) enthält, das eine auf einer konischen Aussparung (20) des Schwimmers (10) aufliegende Kugel (19) bedeckt und auf seiner Oberseite eine Erhebung (21) besitzt, die bei einem Umkippen des Fahrzeugs eine Öffnung (22) verschließt, über die der Stutzen (8) in der oberen Wand des Gehäuses (11) ausmündet.

4. Vorrichtung nach einem der Ansprüche 1 bis 3, dadurch gekennzeichnet, daß das Ventil (V) an einem tiefgelegenen und zentralen Teil (2a) der oberen Wand (2) befestigt ist.

5. Vorrichtung nach einem der Ansprüche 1 bis 4, dadurch gekennzeichnet, daß der Schwimmer (10) aus zwei Teilen besteht, einem oberen Teil (10A), der in dem Gehäuse (11) gleitet, und einem luftgefüllten unteren Teil (10B), der am unteren Ende des oberen Teils (10A) lösbar angebracht ist.

**Claims**

1. Device for venting a fuel tank (1), comprising on the one hand a degassing tube (5) having one end (5a) opening into the upper, inner part of the tank (1), appreciably lower than an upper partition (2) of the latter, and on the other hand a pipe (8) connecting said inner part to the outside through the intermediary of a valve (V) carried by the upper partition (2), characterized in that since the valve (V) is of the type comprising a ball (19) and float (10), which is normally open, but closed in the case of inversion by a closure member (18) co-operating with the ball, the float (10) extends sufficiently downwards to be raised by the fuel (7) when the latter reaches said end (5a), the lower side (10B') of the float (10) being lower than the end (5a) of the tube (5) and means (15, 17) for the limited flow of fuel are provided in order that this raising places the valve (V) in a partly opened state.

2. Device according to claim 1, characterized in that since the valve (V) comprises an open housing (11) in which the float (10) slides, the latter defines with the upper edge of the housing (11), into which said pipe (8) opens, a chamber (14) permanently communicating with the inner part of the tank (1) through an aperture (15) of small section, provided in the wall (16) of the float (10), and when the float (10) is in the lower position through at least one passage (17) provided between the housing (11) and the float (10), able to be obturated in the raised position of the float (10).

3. Device according to claim 2, characterized in that the chamber (14) contains a member (18) in the shape of a bell, which covers the ball (19) resting on a conical cavity (20) in the float (10), and which is provided on its upper side with a boss (21) capable of closing, if the vehicle overturns, an orifice (22) through which the pipe (8) opens into the bottom of the housing (11).

4. Device according to one of claims 1 to 3, characterized in that the valve (V) is fixed to a lower and central portion (2a) of the upper partition (2).

5. Device according to one of claims 1 to 4, characterized in that the float (10) is composed of two parts: an upper part (10A) sliding in the housing (11) and a lower part (10B) with an air reserve, detachably mounted on the base of the upper part (10A).

EP 0 254 631 B1

FIG.1

FIG.2

FIG.3